# EUROPÄISCHE PATENTANMELDUNG

(11) **EP 1 584 275 A2**
(43) Veröffentlichungstag der Anmeldung: **12.10.2005**
(21) Anmeldenummer: 05405233.7
(22) Anmeldetag: 09.03.2005
(51) Int. Cl.: A47J 43/25

(54) **Käsereibe mit ausziehbarer Kurbel**

(30) Priorität: 05.04.2004 CH 5852004
(71) Anmelder: MOHA MODERNE HAUSHALTWAREN AG, CH-3052 Zollikofen (CH)
(72) Erfinder: Herren, Bruno, 6052 Hergiswil (CH)
(74) Vertreter: Schneider Feldmann AG Patent- und Markenanwälte

(57) **Zusammenfassung**

Die Käsereibe (1) weist ein Gehäuse (2), eine im Gehäuse (2) aufgenommene Reibtrommel (3) mit einer Reibtrommelachse (30), einen Drücker (4) zum Andrücken des Käses gegen die Reibtrommel (3) und eine mit der Reibtrommel (3) drehfest verbundene Kurbel (5) mit einem Handgriff (51) zum Ausüben eines Drehmomentes an der Reibtrommel (3) auf. Der Abstand (a) zwischen der Reibtrommelachse (30) und dem Handgriff (51) ist veränderbar. Da das durch eine Kraft am Handgriff (51) auf die Reibtrommel (3) ausgeübte Drehmoment direkt zum besagten Abstand (a) proportional ist, kann es durch Verändern des Abstands (a) eingestellt werden. Zum Verstauen der Reibe (1) kann ein minimaler Abstand (a) gewählt werden, damit die Reibe (1) möglichst wenig Platz einnimmt. Die Veränderbarkeit des Abstands (a) verleiht der Reibe (1) eine grosse Flexibilität.

## Beschreibung

Die vorliegende Erfindung betrifft eine Reibe, bspw. eine Käsereibe, gemäss Oberbegriff des ersten Patentanspruchs.

Eine gattungsgemässe Käsereibe ist z. B. aus der Patentschrift CH-689'010 bekannt. Sie beinhaltet ein Gehäuse zur Aufnahme einer Reibtrommel. Ferner beinhaltet sie einen Drücker zum Andrücken des zu reibenden Käses gegen die Reibtrommel. An einer Stirnseite der Reibtrommel ist eine Kurbel zum Drehen der Reibtrommel befestigt.

Bei derartigen Käsereiben muss bezüglich der Kurbellänge ein Kompromiss geschlossen werden, bei dem zwei einander entgegengesetzte Anforderungen zu berücksichtigen sind:
- Einerseits soll die Kurbel möglichst lang sein, um bei zumutbarer Kraftausübung auf den Kurbelhandgriff ein genügend grosses Drehmoment auf die Reibtrommel ausüben zu können;
- andererseits soll aber die Kurbel möglichst kurz sein, damit die Käsereibe handlich und gut verstaubar ist.

Eine gewählte Kompromisslösung ist selten bezüglich beider Anforderungen gleichermassen befriedigend. Es ist Aufgabe der vorliegenden Erfindung, hier Abhilfe zu schaffen.

Die Aufgabe wird gelöst durch die Käsereibe, wie sie im ersten Patentanspruch definiert ist. Vorteilhafte Ausführungsformen werden in den abhängigen Patentansprüchen definiert.

Die erfindungsgemässe Reibe, bspw. eine Käsereibe, weist ein Gehäuse, eine im Gehäuse aufgenommene Reibtrommel mit einer Reibtrommelachse, einen Drücker zum Andrücken von Reibgut gegen die Reibtrommel und eine mit der Reibtrommel drehfest verbundene Kurbel mit einem Handgriff zum Ausüben eines Drehmomentes an der Reibtrommel auf. Der Abstand zwischen der Reibtrommelachse und dem Handgriff ist veränderbar.

Die Veränderbarkeit des Abstands zwischen der Reibtrommelachse und dem Handgriff verleiht der Reibe eine bisher unbekannte Flexibilität. Da das durch eine Kraft am Handgriff auf die Reibtrommel ausgeübte Drehmoment direkt zum besagten Abstand proportional ist, kann es durch Verändern des Abstands eingestellt werden. So wird bspw. für sehr hartes Reibgut vorzugsweise ein grosser Abstand gewählt, damit das Reibgut trotz seiner Härte mit relativ kleinem Kraftaufwand gerieben werden kann. Für weicheres Reibgut genügt hingegen ein kleinerer Abstand, damit der beim Reiben von der Hand zurückgelegte kreisförmige Weg nicht zu lang ist. Zum Verstauen der Reibe kann ein minimaler Abstand gewählt werden, damit die Reibe möglichst wenig Platz einnimmt. Auf diese Weise vereinigt die erfindungsgemässe Reibe Vorteile, die bisher zwar einzeln verwirklicht werden konnten, einander aber gegenseitig ausschlossen.

Nachfolgend wird ein Ausführungsbeispiel der erfindungsgemässen Käsereibe anhand der Zeichnungen detailliert beschrieben. Dabei zeigen:
- Fig. 1: die erfindungsgemässe Käsereibe in einer perspektivischen Ansicht, wobei der Drücker ausgeklappt ist,
- Fig. 2: die erfindungsgemässe Käsereibe in einer perspektivischen Ansicht, wobei der Drücker versenkt ist,
- Fig. 3: die Kurbel der erfindungsgemässen Käsereibe in einer Draufsicht,
- Fig. 4: das kurbelseitige Kupplungsteil der erfindungsgemässen Käsereibe in einer Draufsicht,
- Fig. 5: Kurbel und kurbelseitiges Kupplungsteil der erfindungsgemässen Käsereibe in einer Draufsicht, und
- Fig. 6: eine bevorzugte Ausführungsform des Trommelmantels der erfindungsgemässen Käsereibe in einer Draufsicht, wobei der Trommelmantel abgerollt ist.

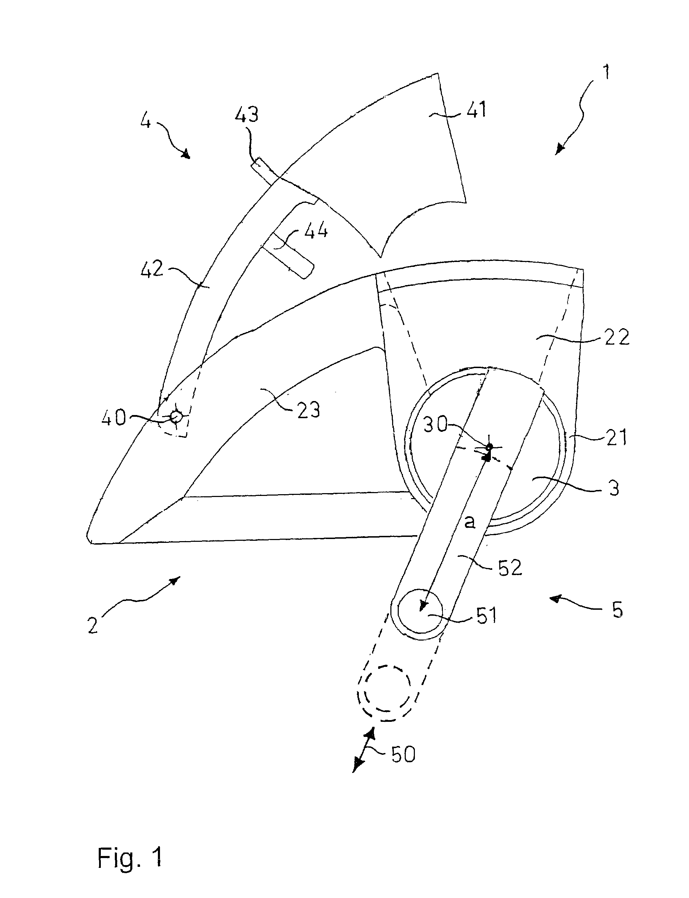

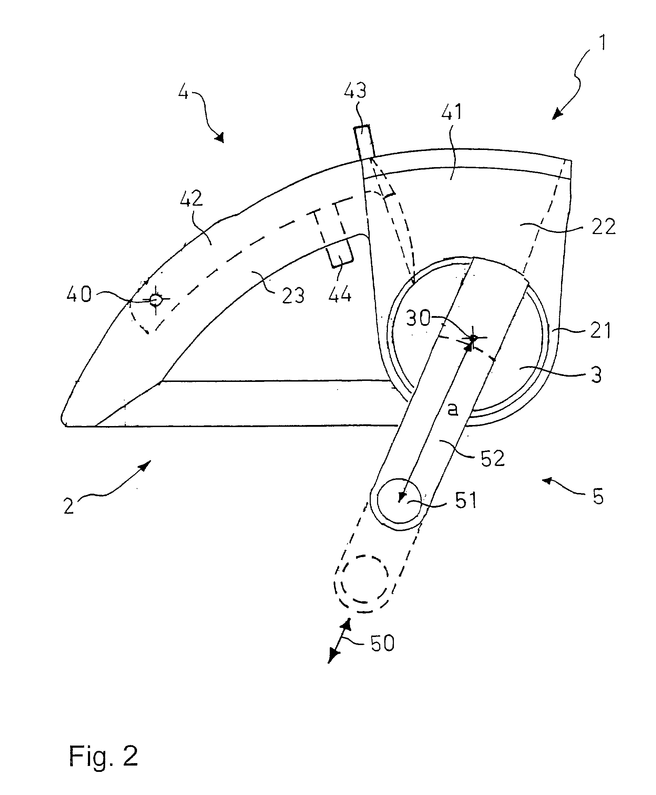

Die erfindungsgemässe Käsereibe 1 ist in einer perspektivischen Ansicht in **Figuren 1 und 2** dargestellt. Die Käsereibe 1 weist ein Gehäuse 2 auf. Ein erster Gehäuseteil 21 dient zur Aufnahme einer vorzugsweise zylindrischen Reibtrommel 3 mit einer Reibtrommelachse 30, ein zweiter Gehäuseteil 22 dient zur Aufnahme des zu reibenden Käses, und ein dritter Gehäuseteil 23 ist als Griff ausgebildet. Die Käsereibe 1 weist ferner einen Drücker 4 zum Andrücken des Reibgutes gegen die Reibtrommel 3 auf, welcher Drücker 4 um eine Drückerachse 40 schwenkbar am Griff 23 des Gehäuses 2 befestigt ist.

Eine Kurbel 5 mit einem Handgriff 51 und einem geraden Kurbelarm 52 zum Ausüben eines Drehmomentes an der Reibtrommel 3 ist mit der Reibtrommel 3 drehfest verbunden, und zwar derart, dass der Abstand a zwischen der Reibtrommelachse 30 und dem Handgriff 51 veränderbar ist. In Figuren 1 und 2 ist die Kurbel 5 in zwei Positionen eingezeichnet: in ausgezogenen Linien in einer eingefahrenen Position, und strichliniert in einer ausgefahrenen Position. Zwischen diesen Extrempositionen kann die Kurbel 5 kontinuierliche Zwischenpositionen einnehmen, angedeutet mit einem Pfeil 50.

Während ein Mantel 31 der Reibtrommel 3 vorzugsweise aus Metall besteht, sind die übrigen Teile der Reibe 1 vorzugsweise aus Kunststoff gefertigt.

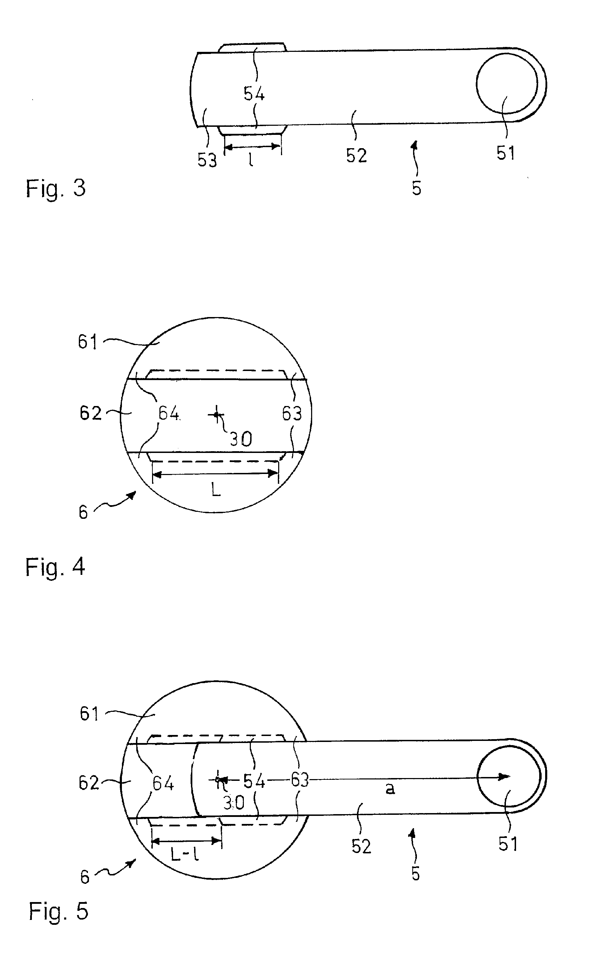

**Figuren 3 bis 5** zeigen eine von vielen Möglichkeiten, wie Mittel 54, 62, 64 zur Änderung des Abstands a zwischen der Reibtrommelachse 30 und dem Handgriff 51 ausgeführt sein können. Zur Ankupplung zwischen der Kurbel 5 und der Reibtrommel 3 ist ein kurbelseitiges Kupplungsteil 6 und ein (nicht dargestelltes) trommelseitiges Kupplungsteil vorhanden. Das kurbelseitige Kupplungsteil 6 hat bspw. die Form einer Kugelkalotte, in deren konvexen Oberseite 61 eine T-Nut 62 mit vorderem Anschlag 63 und hinterem Anschlag 64 vorgesehen ist. Die Breiten der T-Nut 62 und des Kurbelarms 52 sind derart aufeinander abgestimmt, dass der Kurbelarm 52 in der T-Nut 62 in radialer Richtung führbar, aber nicht verdrehbar ist. Dasjenige Ende 53 des Kurbelarms 52, das dem Handgriff 51 gegenüberliegt, ist auf beiden Längsseiten mit länglichen, vorspringenden Rippen 54 versehen. Diese Rippen 54 greifen in die T-Nut 62 ein. Durch das Zusammenwirken der Rippen 54 und der T-Nut 62 wird ein Abheben der Kurbel 5 verhindert. Der vordere Anschlag 63 und der hintere Anschlag 64 definieren zusammen mit den Rippen 54 die beiden Extrempositionen der Kurbel 5 bzw. den maximalen Verschiebungsweg. Wenn mit L die Distanz zwischen vorderem Anschlag 63 und hinterem Anschlag 64 sowie mit 1 die Länge einer Rippe 54 bezeichnet wird, so beträgt der maximale Verschiebungsweg L-l. In einer bevorzugten, beispielhaften Ausführungsform ist L = 37 mm, l = 17 mm und L-l = 20 mm, wobei der minimale Abstand aₘᵢₙ zwischen der Reibtrommelachse 30 und dem Handgriff 51 amin = 60 mm und der maximale Abstand aₘₐₓ zwischen der Reibtrommelachse 30 und dem Handgriff 51 aₘₐₓ = 77 mm beträgt.

Das kurbelseitige Kupplungsteil 6 wirkt mit einem (nicht eingezeichneten) trommelseitigen Kupplungsteil zusammen, so dass das über die Kurbel ausgeübte Drehmoment auf die Reibtrommel 3 übertragen wird. Für diese Zwecke geeignete Kupplungen, vorzugsweise lösbare Kupplungen, sind bekannt.

Anhand der **Figuren 1 und 2** wird im Folgenden auf einige vorteilhafte Merkmale der bevorzugten Ausführungsform eingegangen.

Der über der Reibtrommel 3 liegende zweite Gehäuseteil 22, der zur Aufnahme des zu reibenden Käses dient, ist vorzugsweise nach allen vier Seiten geschlossen, d. h. hat eine ununterbrochene, umlaufende Wandung. Dadurch wird verhindert, dass Teile des zu reibenden Käses durch mögliche Öffnungen herausfallen. Um diese Anforderung zu erfüllen, greift ein Kopf 41 des Drückers 4 von oben in das Gehäuse 2 ein. Ein Hals 42 des Drückers 4 ist am oberen Teil des Drückerkopfes 41 angesetzt, so dass der Drückerkopf 41 bei leerem zweitem Gehäuseteil 22, in versenkter Position (vgl. Fig. 2), bis zur Reibtrommel 3 reicht.

Aus ästhetischen Gründen kann es erwünscht sein, dass der Drückerhals 42 ganz im Griff 23 des Gehäuses 2 versenkbar ist (vgl. Fig. 2); dies ergibt eine besonders formschöne Erscheinung der Käsereibe. Bei einer derartigen Konstruktion könnte es beschwerlich sein, den sich in der versenkten Position befindenden Drücker 4 aus dem Gehäuse 2 hervorzuholen, um bspw. Käse einzufüllen. Um das Hervorholen zu erleichtern, sind am Drücker 4 ein Vorsprung 43 und ein Dorn 44 vorgesehen. Der Vorsprung 43 einerseits ist aus der Oberseite des Drückerhalses 42 herausgeformt, nahe der Ansatzstelle zwischen Drückerkopf 41 und Drückerhals 42. Wird bspw. mit dem Daumen auf das obere Ende des Vorsprungs 43 eine vom Drückerkopf 41 weg zeigende, parallel zum Drückerhals 42 gerichtet Kraft ausgeübt, so ergibt sich ein Drehmoment bezüglich der Drückerachse 40. Folglich wird der Drückerkopf 41 angehoben. Der Dorn 44 andererseits ist aus der Unterseite des Drückerhalses 42 herausgeformt und ragt durch eine entsprechende Öffnung aus dem Griff 23 des Gehäuses 2 heraus. So kann durch eine senkrecht zum Drückerhals 42 stehende, nach oben gerichtete Druckkraft auf den Dorn 44 der Drücker 4 aus der versenkten Position hervorgehoben werden. Vorsprung 43 und Dorn 44 erlauben auch eine einhändige Bedienung der Käsereibe 1; d. h. eine Hand (bspw. die linke) hält den Griff 23 und holt gleichzeitig den Drücker 4 aus dem Gehäuse 2 hervor, während die andere Hand (bspw. die rechte) frei ist, um Käse nachzufüllen.

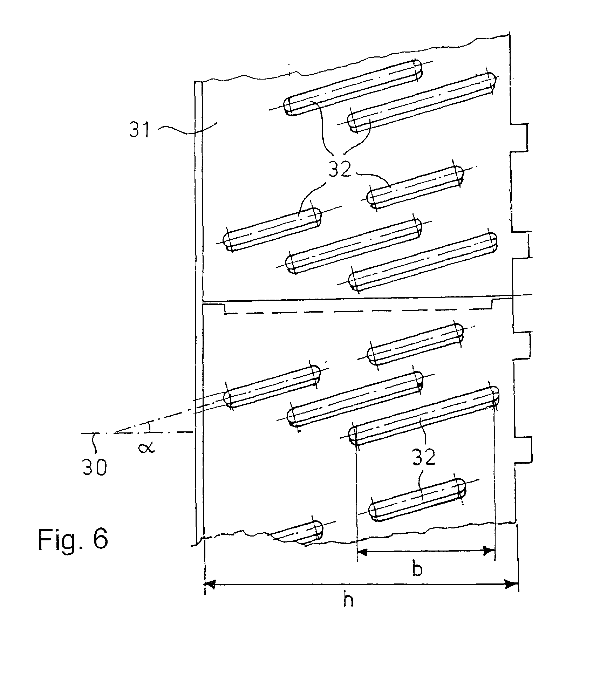

**Figur 6** zeigt schliesslich eine bevorzugte Ausführungsform des Mantels 31 der Reibtrommel 3 in einer Draufsicht, wobei der Trommelmantel 31 abgerollt ist. Der Trommelmantel 31 ist bei dieser Ausführungsform mit länglichen Reibschlitzen 32 versehen, die gegenüber der Trommelachse 30 leicht verkippt sind. Bevorzugte Anstellwinkel α liegen zwischen 5° und 25°, bspw. 15°. Eine besonders effiziente Reibwirkung wird erzielt, wenn sich der Reibschlitz 32 nur über einen Teil des Trommelmantels 31 erstreckt. Das heisst: Die Länge b der Projektion des Reibschlitzes 32 in Richtung der Trommelachse 30 soll wesentlich kleiner sein als die Trommelhöhe h, z. B. 0.1h < b < 0.5h.

Selbstverständlich beschränkt sich die Erfindung nicht auf die oben diskutierte Ausführungsform. Der Fachmann wird bei Kenntnis der Erfindung in der Lage sein, weitere Ausführungsformen zu entwerfen, die auch von der vorliegenden Erfindung umfasst sind. So können die Mittel zur Veränderung des Abstandes zwischen der Reibtrommelachse 30 und dem Handgriff 51 anders gestaltet sein. Das dem Handgriff 51 gegenüber liegende Kurbelende 53 kann fest mit der Reibtrommel 3 verbunden sein, während die Länge des Kurbelarms 52 veränderbar ist, bspw. mittels eines Teleskop-oder eines anderen Mechanismus. Ferner können Mittel vorgesehen sein, um den besagten Abstand a in einer Zwischenposition festzustellen, bspw. Feststellschrauben.

### Bezugszeichenliste:

- 1: Reibe

- 2: Gehäuse
- 21: erster Gehäuseteil
- 22: zweiter Gehäuseteil
- 23: dritter Gehäuseteil

- 3: Reibtrommel
- 30: Reibtrommelachse
- 31: Reibtrommelmantel
- 32: Reibschlitze

- 4: Drücker
- 40: Drückerachse
- 41: Drückerkopf
- 42: Drückerhals
- 43: Vorsprung
- 44: Dorn

- 5: Kurbel
- 50: Abstandsänderung
- 51: Handgriff
- 52: Kurbelarm
- 53: dem Handgriff gegenüber liegendes Ende der Kurbel
- 54: Rippen

- 6: kurbelseitiges Kupplungsteil
- 61: Oberseite des Kupplungsteils
- 62: T-Nut
- 63: vorderer Anschlag
- 64: hinterer Anschlag

- a: Abstand zwischen Reibtrommelachse und Handgriff
- b: Länge der Projektion eines Reibschlitzes auf die Reibtrommelachse
- h: Reibtrommelhöhe
- L: Distanz zwischen vorderem und hinterem Anschlag
- l: Länge der Rippen

- α: Anstellwinkel der Reibschlitze bezüglich der Reibtrommelachse

## Patentansprüche

1. Reibe (1), bspw. Käsereibe, mit
einem Gehäuse (2),
einer im Gehäuse (2) aufgenommenen Reibtrommel (3) mit einer Reibtrommelachse (30),
einem Drücker (4) zum Andrücken von Reibgut gegen die Reibtrommel (3) und
einer mit der Reibtrommel (3) drehfest verbundenen Kurbel (5) mit einem Handgriff (51) zum Ausüben eines Drehmomentes an der Reibtrommel (3),
wobei der Abstand (a) zwischen der Reibtrommelachse (30) und dem Handgriff (51) veränderbar ist **dadurch gekennzeichnet, dass** die Kurbel (5) einen geraden Kurbelarm (52) aufweist, welcher in einer mit einer Stirnseite der Reibtrommel (3) verbundenen Führung (54, 62, 64) im Wesentlichen radial bezüglich der Reibtrommelachse (30) führbar ist..

2. Reibe (1) nach Anspruch 1, wobei die Führung (54, 62, 64) eine T-Nut (62) beinhaltet, deren Breite im Wesentlichen mit der Breite des Kurbelarms (52) übereinstimmt, so dass der Kurbelarm (52) in der T-Nut (62) in radialer Richtung führbar, aber nicht verdrehbar ist, und wobei die T-Nut (62) vorzugsweise einen vordern Anschlag (63) und einen hinteren Anschlag (64) aufweist.

3. Reibe (1) nach Anspruch 2, wobei dasjenige Ende (53) des Kurbelarms (52), das dem Handgriff (51) gegenüberliegt, auf beiden Längsseiten mit länglichen, vorspringenden Rippen (54) versehen ist, welche in die T-Nut (62) eingreifen.

4. Reibe (1) nach einem der vorangehenden Ansprüche, wobei der über der Reibtrommel (3) liegende Gehäuseteil (22), der zur Aufnahme des Reibgutes dient, vorzugsweise nach allen vier Seiten geschlossen ist.

5. Reibe (1) nach Anspruch 4, wobei ein Kopf (41) des Drückers (4) von oben in das Gehäuse (2) eingreift.

6. Reibe (1) nach Anspruch 5, wobei der Drücker (4) um eine Drückerachse (40) schwenkbar am Gehäuse (2) befestigt ist und ein Hals (42) des Drückers (4) am oberen Teil des Drückerkopfes (41) angesetzt ist, so dass der Drückerkopf (41) bis zur Reibtrommel (3) versenkbar ist.

7. Reibe (1) nach einem der vorangehenden Ansprüche, wobei der Drücker (4) um eine Drückerachse (40) schwenkbar am Gehäuse (2) befestigt ist und aus der Oberseite des Drückers (4) ein Vorsprung (43) herausgeformt ist, so dass der Drücker (4) mittels eines Zuges am Vorsprung (43) nach oben schwenkbar ist.

8. Reibe (1) nach einem der vorangehenden Ansprüche, wobei der Drücker (4) um eine Drückerachse (40) schwenkbar am Gehäuse (2) befestigt ist und aus der Unterseite des Drückers (4) ein Dorn (44) herausgeformt ist, so dass der Drücker (4) mittels eines Drucks am Dorn (44) nach oben schwenkbar ist.

9. Reibe (1) nach einem der vorangehenden Ansprüche, wobei der Trommelmantel (31) mit länglichen Reibschlitzen (32) versehen ist, die gegenüber der Trommelachse (30) verkippt sind, wobei bevorzugte Anstellwinkel (α) zwischen 5° und 25°, bspw. 15°, betragen.

10. Reibe (1) nach einem der vorangehenden Ansprüche, wobei der Trommelmantel (31) mit länglichen Reibschlitzen (32) versehen ist und ein Reibschlitz (32) sich nur über einen Teil des Trommelmantels (31) erstreckt, und vorzugsweise die Länge (b) der Projektion des Reibschlitzes (32) in Richtung der Trommelachse (30) wesentlich kleiner ist als die Trommelhöhe (h), z. B. 01.h < b < 0.5h.
